# EUROPEAN PATENT APPLICATION

(11) **EP 2 731 286 A1**
(43) Date of publication of application: **14.05.2014**
(21) Application number: 12250170.3
(22) Date of filing: 09.11.2012
(51) Int. Cl.: H04J 14/02

(54) **Interoperability of optical communication systems**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

One or more optical signals sourced externally to a first optical network (8n) may be transmitted over that optical network as components of a wavelength division multiplex, by extracting the optical signals (30, 40) from a demultiplexing filter (3a) associated with a source (8a), of the optical signals, and combining with a locally generated signal 82a external to the first network 8n, amplifying (61) one or more wavelengths of the multiplex to a level appropriate for adding to the first network, and transmitting the selected wavelengths (70) to the first optical network.

## Description

This invention relates to the interoperability of optical communication networks. Modern optical networks use wavelength division multiplexing (WDM) to allow several signals to be carried over each optical fibre. These signals can be switched at nodes in the network, using OADMs (optical add/drop multiplexers) or reconfigurable OADMs (ROADMs). An OADM has a fixed configuration and requires manual on-site reconfiguration, whereas a ROADM uses WSS (wavelength selective switches) which can be reconfigured by remote control of software within the device. The wavelengths generally used are specified by the International Telecommunications Union in standard " ITU-T G.694.1 frequency grid".

Within the optical domain the signal remains allocated to the same wavelength throughout: the OADM/ROADMs will switch routings and can also operate power balancing functions to amplify or attenuate individual signals. Typically the OADM/ROADM at each node has multiple degrees, each capable of supporting a multiplexed connection to another node. In most cases some ports of the OADM/ROADM are used for connection to multiplexer or demultiplexer filter ports to provide local add/drop access to and from the optical network.

In conventional use, optical signals enter and exit an individual telecommunications operator's optical network by means of transponders, which convert a 'grey' optical signal into an electrical signal and then finally into an optical WDM signal and vice versa (known as an O-E-O conversion). A "grey" interface uses short-reach optics suitable for connections up to the order of 10km, e.g. LR4 for 100G client interfaces (IEEE 100GBASE-LR4). In general each grey connection requires a separate fibre pair. This grey interface, or link, is the traditional way of connecting customers and other networks into the operators' WDM network.

It is sometimes required for optical networks to incorporate equipment with different design parameters, e.g. transponders from different manufacturers, which are subsequently required to interoperate. Typically, such an interoperation would require intermediate regeneration and multiple O-E-O conversions.

The present invention provides an interface in the optical domain which avoids the need for such regeneration or multiple O-E-Os. For example, this would allow an operator to use its existing optical network to carry a signal originating and terminating at transponders outside that operator's network, either co-located with, or remote from, respective termination points of the existing optical network. For the purposes of this specification, such a signal is referred to as an "alien" signal, when it is carried by the operator's network, whereas signals originating in the existing network are referred to herein as "native".

The alien signal can be multiplexed with the native signals provided that it uses a wavelength that is compatible with the native signals, e.g. both "native" and "alien" wavelengths would typically be part of an agreed standard set of wavelengths to which both networks conform (e.g the ITU standard referenced above), and the particular channel selected for the "alien" is reserved in both networks to be used for their respective parts of the complete communication link between the originating transponder to the terminating transponder.

It is highly desirable that the introduction of alien wavelengths to an existing network be effected with little or no impact on the performance of the existing network, e.g. link budget, so that the alien wavelength can be handled in the same way as any other native wavelength in the optical system of the existing network. In particular, to avoid disruption to the native signals there are other properties of the "alien" wavelengths besides those specified in the ITU grid specification which need to be controlled, e.g. by optical power management. It is also desirable that any adaptations to either network to accommodate a connection between them be restricted to the interface between them, so that the connection can be added or removed with no modification to the rest of the network. The present invention is concerned with measures to minimise such disruption.

The "native" signals, will in general have been optimised for the network over which they are carried, and it is therefore desirable that the alien signals be made to conform to these conditions, rather than the native signals be modified to conform with the alien signals. Conversely, the alien signal has been generated, in conformance with the requirements of the equipment on which they were originated. However, whilst in the optical domain there are only limited actions available to the operator.

One particular problem occurs if the alien network is configured to work at a lower power level than the native network. Within the native network, it would be necessary for power balancing to attenuate the native signals to the same power level as the aliens so that they can be transmitted on the same multiplex, which can then be amplified (natives and aliens together) back to the optimum level. This introduces an extra attenuation /amplification cycle into the native signals, which can produce additional noise and is also wasteful of power.

In a first aspect the present invention provides a network architecture which provides an interface in the optical domain between two optical networks. According to the invention, there is provided apparatus for conditioning one or more optical signals sourced externally to a first optical network for transmission over the first optical network, the apparatus comprising an amplifier for amplifying the signals, and a combiner for combining the signals, in such a way as to be made compatible to the first optical network over which they are to be transported.

According to a second aspect there is provided a method for transmitting one or more optical signals sourced externally to a first optical network, the optical signals each being a component of a wavelength division multiplex, the method comprising the steps of extracting the optical signals from a de-multiplexing filter associated with the source, of the optical signals, amplifying one or more wavelengths of the multiplex to a level appropriate for adding to the first network, and transmitting the selected wavelengths to the first optical network.

The input to the amplifier may be an output from a demultiplexing filter of a second network. The output of the amplifier may provide an input to a multiplexing filter port associated with the first network.

In this configuration an optical combiner may be used to combine one or more optical signals, to provide a combined optical input to the amplifier, and an optical splitter can be connected to the output of the amplifier to generate a plurality of combined optical outputs for transmission over the first network. Preferably the optical combiner is a filter acting as a multiplexer and the optical splitter is a filter acting as a de-multiplexer, but non-filtering combiners and splitters may also be used. The input to the amplifier may be a multiplex output of a second network and the output of the amplifier may be a multiplex input to the demultiplexing filter associated with the second network.

In one embodiment the amplifier comprises a bank of amplification elements each operating on a respective optical output from the demultiplexing filter.

The output of the amplifier may be provided as an input to a dedicated port of a wavelength selective switch in an optical add/drop multiplexer on the first network.

Embodiments of the invention will now be described by way of example and with reference to the drawings, in which
Figure 1 is a general arrangement diagram showing the relationships between the networks co-operating to convey a signal.
Figure 2 depicts a conventional grey interface between two optical networks
Figure 3 depicts a simple optical interface between two optical networks via fixed filters.
Figure 4 depicts a simple optical interface between two optical networks via ROADMs
Figure 5 depicts an embodiment of the invention
Figure 6 depicts a modification of the interface of Figure 5
Figure 7 depicts another modification of the interface of Figure 5
Figure 8 depicts a further modification of the interface of Figure 5
Figure 9 depicts a yet further modification of Figure 5.

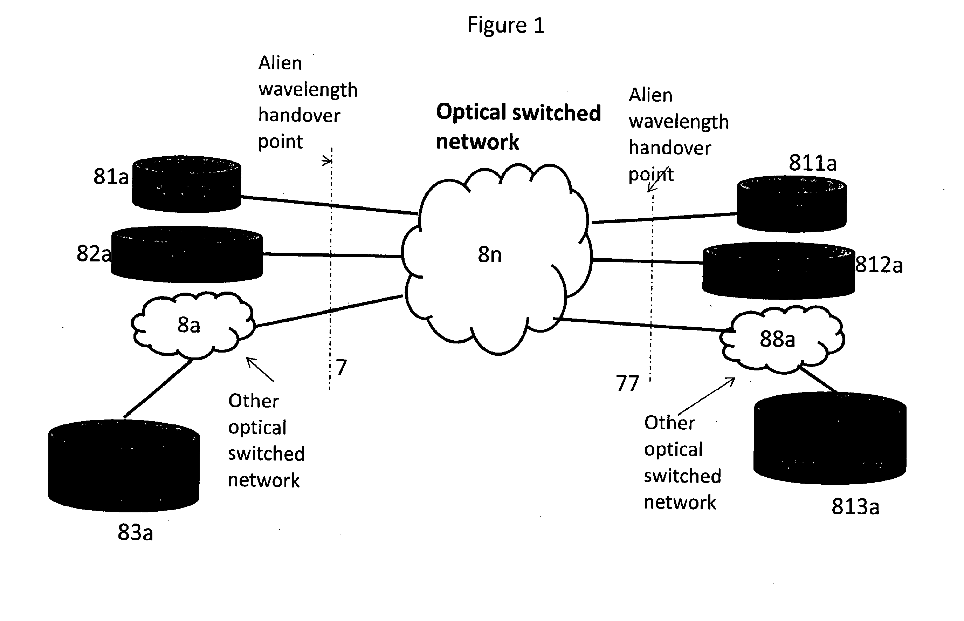

Figure 1 depicts an optical network 8n. As shown a signal can enter the network through multiple sources and routes, both local and remote. Shown are a transponder 82a and router 81a optically generating local wavelengths for transmission via an interface 7 to the optical network 8n to be carried as "alien" wavelengths. Also illustrated is a remote router or transponder 83a for transmission of wavelengths to be generated and transported over another optical network 8a. All these signals are brought together and managed at an alien wavelength handover point 7 for transmission over the optical network 8n. Since all the alien wavelengths originate from disparate sources and locations it is important to ensure they are managed and prepared to meet the requirements of the optical network 8n, over which they are to be transported, with little or no detriment to that network or to any other signals it is carrying. The alien signals are transmitted to another interface 77 at which the alien wavelengths are passed to a local router 811a, local transponder 812a or by way of a further optical network 88a through which a remote router or transponder 813a can be accessed.

The remaining Figures illustrate various configurations for the interface 7 between the originating network/signals and the optical network over which the alien wavelengths are to be carried. Furthermore, it should be apparent that the Figures illustrate one way traffic. In most practical applications there will be similar arrangements provided, operating in antiparallel to convey signal traffic in the reverse direction.

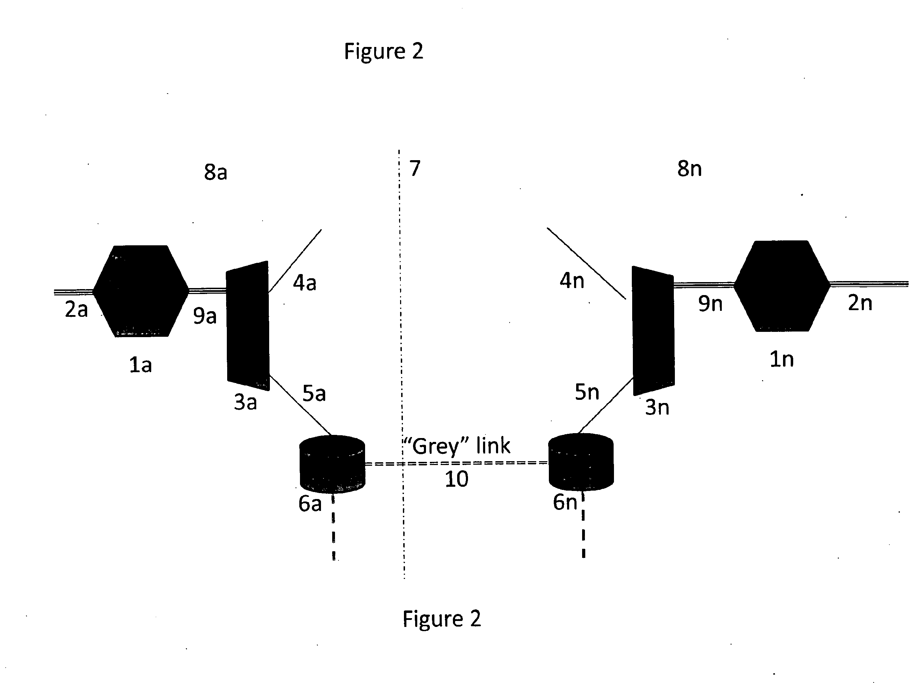

Figure 2 depicts two wavelength selective switches (WSSs) (1a, 1n) each forming parts of two independent optical networks, connected by an optical grey interface 10 across a network interface 7. The WSSs are switching points where individual wavelengths from a multiplex 2a, 2n can be routed into other ports (9a, 9n) for the add/drop connection. Throughout the figures, references suffixed "a" relate to conventional components of the network on which the signal originates, and those suffixed "n" relate to components of the network on which that signal is to be carried as an "alien". The interface 7 at which responsibility for the signal passes from one network operator to another (or between equipment providers) is at some point in the connection 10.

A WSS is also capable of power balancing, that is to say the attenuation of individual wavelengths in the output multiplex is such that they are all transmitted in the multiplex itself at similar power levels. It should be noted that in general any amplification or attenuation within the multiplex itself will affect all wavelengths equally.

A typical ROADM has two or more degrees, each consisting of a WSS, each capable of supporting a multiplexed connection to another ROADM. In Figure 2 only one such degree (2a, : 2n,) is shown in use in each ROADM. The add/drop port (9a, 9n) is connected to a fixed filter 3a/3n acting as a multiplexer or demultiplexer to separate and combine individual optical feeds 4a, 5a; 4n, 5n forming the multiplex. Typically one or more of these feeds may be to or from a transponder 6a, 6n. The fixed filter ports 3a, 3n can also provide a demarcation point between the network operator and the end user, and may incorporate defensive systems to protect the optical network from corruption, for example interference from signals on rogue wavelengths. The fixed filter 3a therefore acts as the demarcation point between the networks, providing the conventional defence point to avoid corruption of one network by the other.

Conventionally, as shown in Figure 2, connection between two operators' optical networks, or dissimilar vendors' equipment, 2a, 2n would be made as a grey connection 10 between respective transponders 6a, 6n each connected to their respective networks through respective fixed filter ports 5a, 5n, typically termed regeneration. Regeneration is costly because it requires more transponders, power and space.

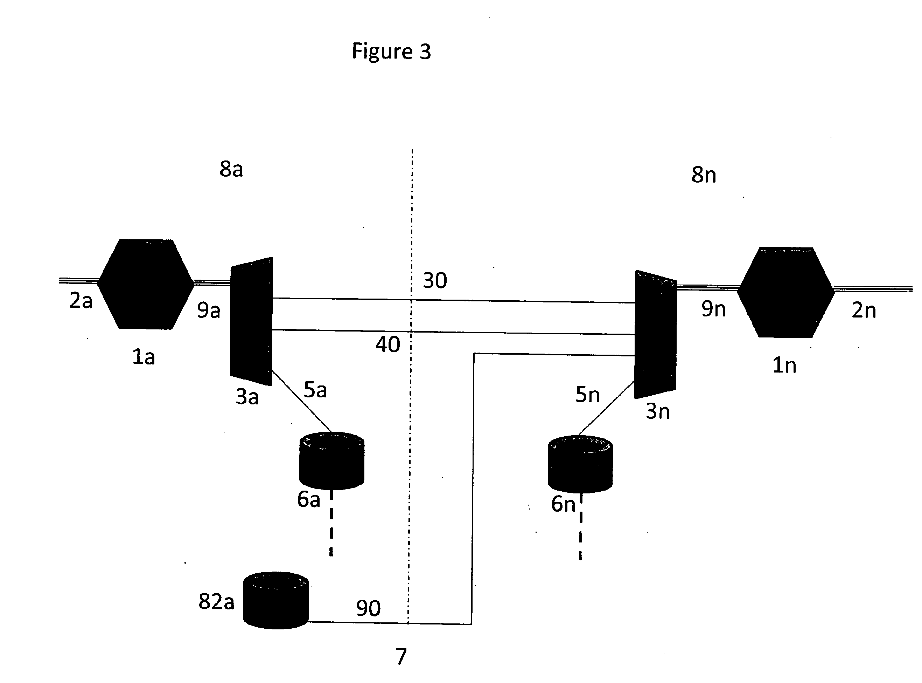

Figure 3 depicts a simple configuration directly connecting two optical networks, without the need for regeneration, by means of optical links 30, 40 between fixed filter ports 3a, 3n each associated with a respective WSS 1a, 1n in the respective networks. In such an arrangement the wavelengths carrying the signals to be transmitted from the WSS 1a to the WSS 1n are extracted from the multiplex by the filter port 3a and fed to the filter port 3n associated with the destination WSS 1n, where they are multiplexed with channels carried on other wavelengths (5n) and fed to the WSS 1n for onward routing. It is necessary for the two networks to co-operate to allow the same wavelengths to be used in both networks 2a, 2n for the signals 30, 40 to be carried from one network to the other. Figure 3 also illustrates the addition of a local transponder/router interface alien wavelength from a local transponder 82a via a connection 90.

A problem would arise with this simple arrangement because of optical power disparities between the alien inputs 30, 40, 90 and the native input 5n. Typically the "alien" signals 30, 40, 90 will be of lower power, e.g. by ∼10dB, than the "native" inputs 5n, because of patching and connector losses or low output in the originating transponder/router 82a. A power difference on this scale can result in undesirable effects, most importantly compromising the performance of the native signals. The power-balancing capability of the WSS 1n at the receiving end can be used to balance the power between the various wavelengths on each output multiplex 2n. However, a WSS can only balance power on different channels by attenuating the stronger signals. In general the "alien" is the weaker signal because the additional filter losses (3a, 3n) or the alien transponder/router 82a) from which the signal originates operates at a lower power. Matching this weaker signal to the native signals would, requires all the "native" signals 5n on the multiplex to be attenuated down to a level appropriate for the "alien" signals (30, 40, 90) so that the levels on the output multiplex 2n are matched, and then the entire multiplex amplified back to the level appropriate to the design specification of the native network. This attenuation/amplification cycle imposed on the "native" signals would introduce noise into the signals potentially compromising the link budget.

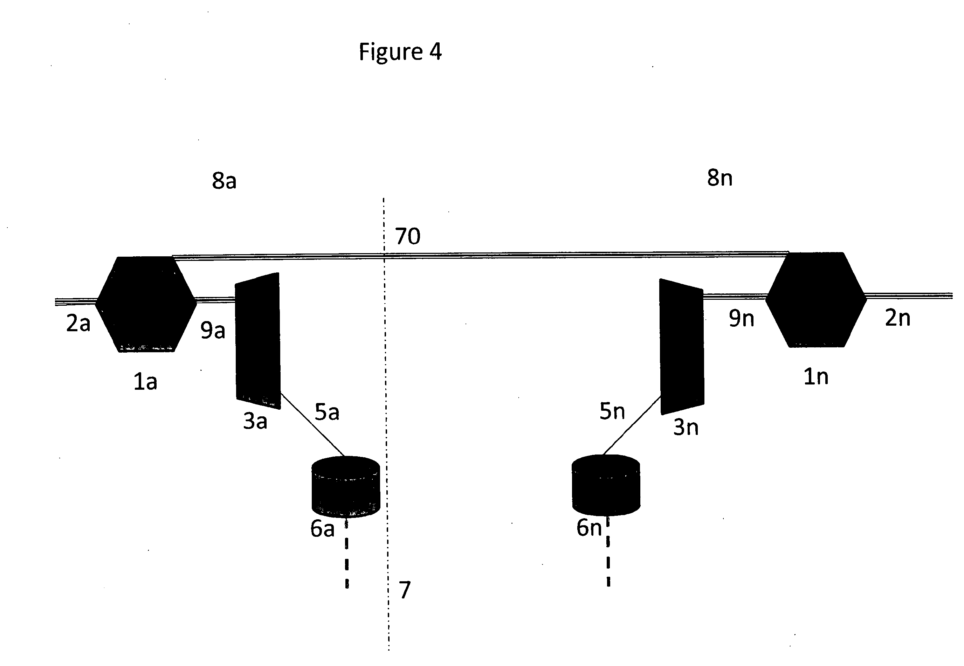

In Figure 4 a multiplexed optical connection 70 is provided between the networks. This connection is terminated on each network using one of the WSS ports 1a, 1n between which the interface 7 is to be made. This would allow direct connection to be made with minimal amplification and no multiplexing losses or filtering. Any attenuation required could be performed by the WSSs themselves. The arrangement also requires no additional treatment to any wavelengths 5a, 5n that remain "native" to either network, as these are handled by a different ports 9a, 9n of the respective WSSs 1a, 1n.

However, this embodiment provides an external connection to each network which does not go through the standard network interface and "first line of defence" of a fixed filter 3a, 3n. Alternative measures would need to be applied to restrict wavelength drift between the two networks. Moreover, currently, as each WSS broadcasts all wavelengths it receives to each output port, the WSS 1a from which the interfacing signal 70 originates does not have the ability to screen out any unwanted wavelengths from its output which are not required in the other network. This can raise issues of privacy/security of communication for the users of the originating network.

The arrangement of Figure 4 also requires the nodes 1a, 1n at each end of the interface to each have a spare port available for use for the interconnection.

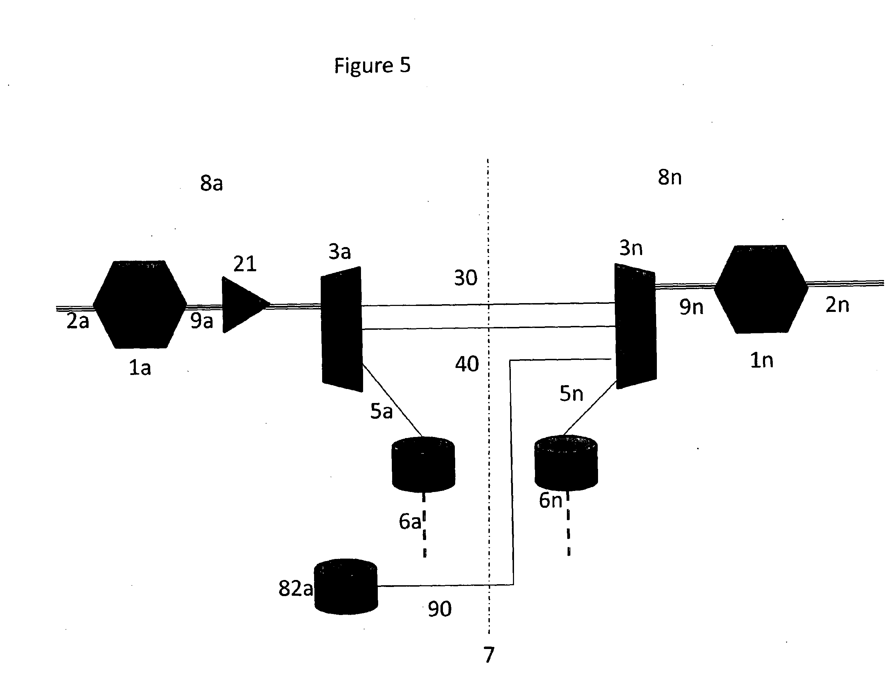

The embodiments of the present invention discussed below in relation to Figures 5 to 9 provide new interface configurations which allow optical multiplexes to carry components generated according to a first set of parameters ("alien wavelengths") over a network 8n (or part of a network) operating according to a second set of parameters with minimal effect on components generated according to that second set of parameters ("native wavelengths").

In an embodiment depicted in Figure 5 pre-amplification 21 is applied before the signal reaches the network terminating port 3a on the originating side of the interface 7. This arrangement requires no additional equipment except for the amplifier 21, and in particular no additional multiplexing and demultiplexing. However, any wavelengths 5a being dropped at the termination filter 3a will also be amplified, which may introduce unnecessary noise to the signals carried by those wavelengths, and they may require attenuation, or modification to the transponders 6a handling those channels. It is undesirable for such modifications to be made on feeds which are common with the local add/drops 5a, 5n, so that both core networks can remain unmodified, and interfaces between networks added and removed without disruption to the operation of either network. Also shown is local alien wavelength addition from a source 82a via connection 90.

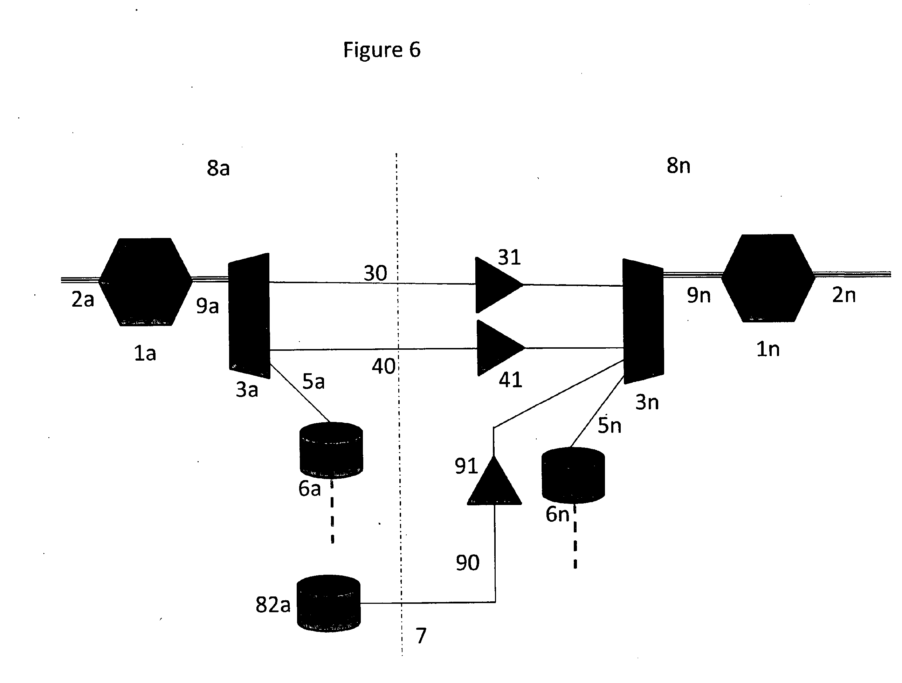

This arrangement requires modification of the network from which the wavelengths originated, but not to the network to which they are entering. In some situations it is desirable for any necessary modifications to be made to the network over which the "alien" signal is to be carried (i.e the signal crosses the interface 7 before any extra processing takes place). The embodiments depicted in the following embodiments, depicted in Figure 6, Figure 7 and Figure 8, allow all necessary processing 31, 41, 51, 61, 91 to take place close to the interface 7, specifically between the respective add/drop multiplexers 3a, 3n, and can therefore be under the responsibility of either network operator or provider, as convenient. They are depicted in these Figures as part of the intermediate network 8n, but equally could be part of the originating network 8a.

Figure 6 depicts a system according to the invention in which each optical channel 30, 40, 90 arriving at the filter port 3n across the network interface 7 is pre-amplified by a respective amplifier 31, 41, 91 (or attenuated if appropriate) in order to provide an input at a level similar to those of the "native" inputs 5n arriving at the filter port 3n from a local transponder 6n, so that the components of the multiplex 9n arriving at the WSS 1n are at approximately the same level. This reduces the power balancing required of the WSS 1n, although it may need to provide some fine adjustment.

This arrangement is not scalable because it requires each channel to have its own pre-amplifier (or attenuator),31, 41, 91 which requires a relatively bulky installation, and additional power arrangements.

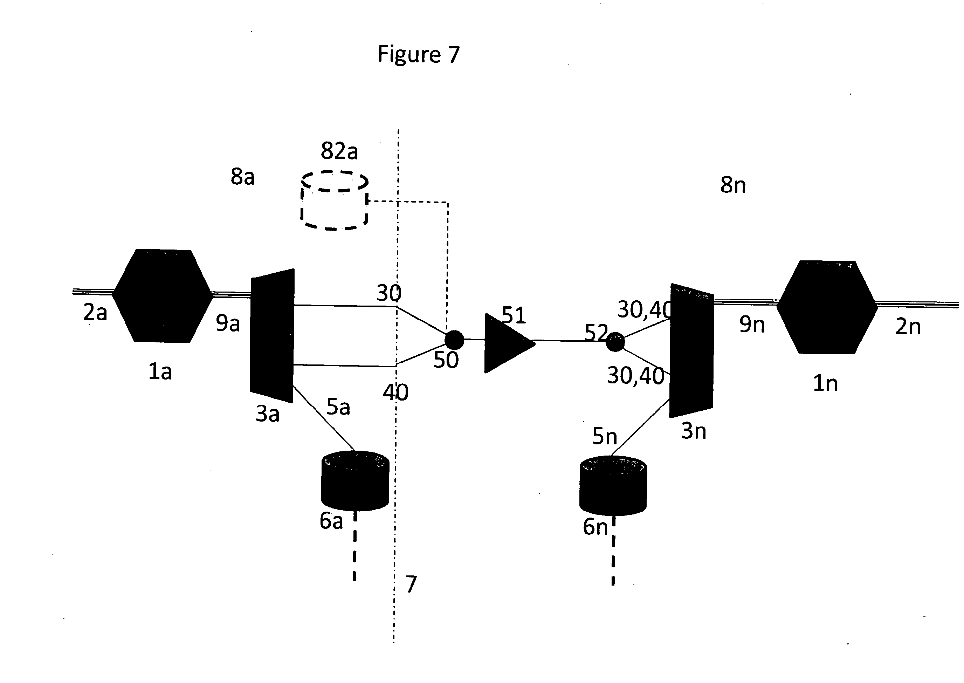

Figure 7 illustrates a modified embodiment, which requires only one pre-amplifier (or attenuator) 51. All channels 30, 40 passing the interface 7 are combined at a combiner 50, amplified by the amplifier 51, and then passed through a splitter 52 to be fed to the required ports of the filter 3n. Necessarily, all channels passing the interface 7 in this configuration are amplified by the same amount, but as they have originated from the same multiplex 2a, they are likely to require similar amplification levels, with any fine adjustment being performed by the WSS 1n. Additionally a local alien wavelength from a transponder/router 82a over the interface 7 may be added at the combiner, 50.

The splitter 52 does not filter the combined signal, so all channels 30, 40 are fed to all ports of the filter 3n, each port selecting the wavelength specific to that port. This arrangement is also not readily scalable because it requires considerable levels of pre-amplification 51 because all wavelengths are transmitted to all ports of the multiplexing filter 3n, and at each port all wavelengths except its specific are removed. For small numbers of channels the amplification factor may be manageable but as the number of channels increases, the required amplification factor increases in proportion. The high amplification factors required are not only wasteful of power but can result in cross talk.

This arrangement may be of use where the "alien" signals 30, 40 require attenuation, rather than amplification, to match the levels of the "native" signals 5n, as the splitter 52 will automatically attenuate each of the signals by a factor equal to the number of branches - so a four-way split would result in attenuation by a factor of four (6 dB).

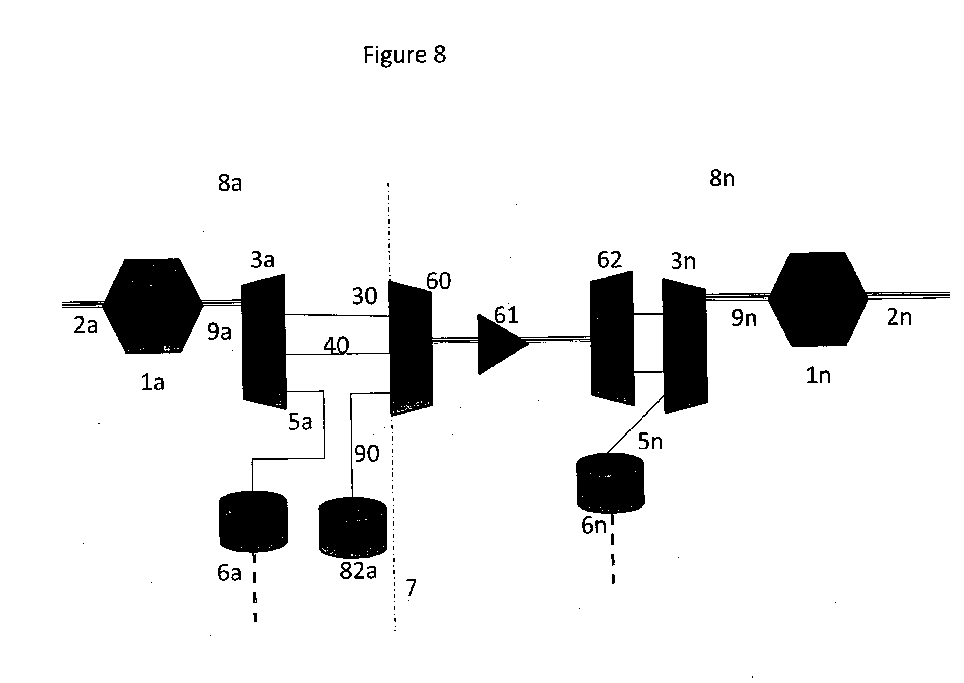

An alternative arrangement is shown in Figure 8. In this arrangement the splitters 50, 52 of the embodiment of Figure 7 are replaced by a multiplexer 60 and demultiplexer 62. This allows a much lower level of amplification 61 to be used. As with the previous embodiment, all channels passing the interface 7 in this configuration are necessarily amplified by the same amount by the amplifier 61. Unlike the embodiments in Figures 6 and 7 this is readily scalable with the degree of attenuation independent of the number of wavelengths carried. This also has the benefit of providing a clear physical demarcation point, 60, at which the alien wavelengths enter the network. Again a local alien wavelength is added from a local transponder 82a via connection 90.

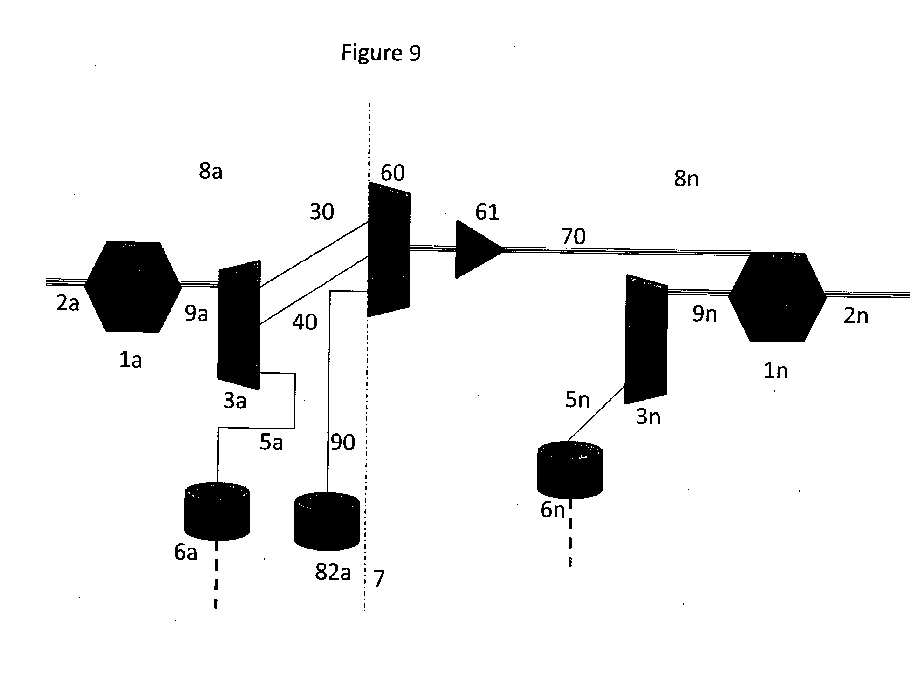

A further embodiment is depicted in Figure 9. In this arrangement the handing off network 8a is connected to the interface 7 through a filter port 3a in a similar manner to that of Figure 8. In this case the alien wavelengths 30, 40 are dropped from the network 8a through a fixed filter/demultiplexer, 3a then added to the network 8n through another fixed filter/multiplexer 60. Typically this adds about an additional ∼5dB of loss so additional amplification 61 is provided to the optical multiplex carried over the interface. This can also compensate for any differences in working power between the networks. A local alien wavelength from a source 82a can also be added at filter/multiplexer 60.

The resulting signal 70 is then added as to a port on the WSS 1n on the receiving end of the interface. This arrangement avoids any unnecessary amplification or attenuation of intra-network traffic ("native" wavelengths) on either network - on the originating network the wavelengths 5a are extracted from the filter port 3a as normal, whilst on the receiving network terminal they are handled by a separate port 9n of the WSS 1n.

As is normal, the management systems of both networks operate as usual with a filter 3a, 60, attached to the relevant ports of their respective WSSs 1a, 1n, so require no special reconfiguration to accommodate the interface between the networks.

## Claims

1. Apparatus for conditioning one or more optical signals sourced externally to a first optical network (8n) for transmission over the first optical network, the apparatus comprising an amplifier (21, 31, 41, 51, 61, 91) for amplifying the signals, and a combiner (3n, 50 60) for combining the signals, in such a way as to be made compatible to the first optical network over which they are to be transported.

2. Apparatus according to Claim 1, wherein the input to the amplifier (31,41, 51, 61) is an output from a demultiplexing filter (3a) of a second network.

3. Apparatus according to claim 2, wherein the output of the amplifier (31, 41, 51, 61) is provided as an input to a multiplexing filter port (3n) associated with the first network (1n).

4. Apparatus according to claim 1, claim 2, or claim 3 further comprising an optical combiner (50, 60) to combine one or more optical signals, to provide a combined optical input to the amplifier (51, 61) and an optical splitter (52, 62) connected to the output of the amplifier to generate a plurality of combined optical outputs (30, 40) for transmission over the first network.

5. Apparatus according to claim 4, wherein the optical combiner is a filter (60) acting as a multiplexer and the optical splitter is a filter (62) acting as a de-multiplexer.

6. Apparatus according to Claim 5, wherein the input to the amplifier (61) is a multiplex output of a second network (8a) and the output of the amplifier is a multiplex input to the demultiplexing filter (62) associated with the second network.

7. Apparatus according to Claim 2, wherein the amplifier comprises a bank of amplification elements (31, 41), each operating on a respective optical output (30, 40) from the demultiplexing filter (3a).

8. Apparatus according to claim 2, wherein the output of the amplifier (61) is provided as an input to a dedicated port of a wavelength selective switch in an optical add/drop multiplexer (1n) on the first network (8n).

9. A method for transmitting one or more optical signals sourced externally to a first optical network (8n), the optical signals each being a component of a wavelength division multiplex, the method comprising the steps of extracting the optical signals from a source (8a, 82a), of the optical signals , amplifying one or more of the signals to a level appropriate for adding to the first network, and transmitting the selected wavelengths to the first optical network.

10. A method according to Claim 9, wherein the amplification step is performed on an input to a multiplexing filter (3a) in the first network.

11. A method according to Claim 9, wherein the amplification step is performed on one or more demultiplexed outputs (30, 40) from a second network (8a).

12. A method according to Claim 11, wherein each of a plurality of demultiplexed outputs from the second network is amplified by a respective one of a bank of amplification elements (31, 41).

13. A method according to claim 11, wherein a plurality of demultiplexed outputs (30, 40) from the second network (8a) are combined in an optical combiner (3n, 50, 60), the combined output is amplified, and an optical splitter (52, 62) connected to the amplified combined signal generates a plurality of optical outputs (30, 40) for transmission to the first network.

14. A method according to claim 13, wherein the optical combiner is a filter (60) acting as a multiplexer and the optical splitter is a filter (62) acting as a de-multiplexer.

15. A method according to claim 11, wherein the output of the amplifier (61) is provided as an input to a dedicated port of a wavelength selective switch in an optical add/drop multiplexer (1n) of the first optical network (8n)

16. A method according to claim 11, claim 12, claim 13 or Claim 14, wherein the output of the amplifier (31, 41, 51, 61) is provided as an input to a multiplexing filter (3n) associated with the first optical network (8n).
